# EUROPEAN PATENT APPLICATION

(11) **EP 3 173 678 A1**
(43) Date of publication of application: **31.05.2017**
(21) Application number: 15825135.5
(22) Date of filing: 17.07.2015
(51) Int. Cl.: F21S 2/00

(54) **SURFACE LIGHTING BODY**

(30) Priority: 25.07.2014 JP 2014151676
(71) Applicant: Meitaku Industry Co. Ltd., Otsu-shi, Shiga 520-0043 (JP)
(72) Inventor: MATSUI, Hirokazu, Otsu-shi Shiga 520-0043 (JP); MATSUI, Katsuhiro, Otsu-shi Shiga 520-0043 (JP); MASUDA, Tomohiko, Otsu-shi Shiga 520-0043 (JP)
(74) Representative: Loyer & Abello
(86) International application number: PCT/JP2015/070544
(87) International publication number: WO 2016/013512

(57) **Abstract**

A surface lighting assembly emitting light from a surface by making light from a light source incident to an incident end surface of a light guide plate is provided. The surface lighting assembly has a laminated body overlapping a diffuser sheet and an opaque plate on a surface of the light guide plate, a frame member arranging along an end edge of the laminated body, and a fastening member fixing the laminated body and the frame member in the thickness direction. The frame member is formed with U-shaped in cross section. In the first and second side surfaces, through holes are formed so as to insert the fastening member and guide it along the longitudinal direction of the frame member.

## Description

### BACKGROUND OF THE INVENTION

The present invention relates to a surface lighting assembly which emits light from surfaces by making light from a light source incident to an incident end surface of a light guide plate.

### Description of the Related Art

Conventionally, a surface lighting assembly which emits light from surface by making light from a light source incident to an incident end surface of a light guide plate is used as a back-lighting of a positive film in a display device which displays drawn pattern in the positive film by light emission and a lighting apparatus emitting light from surfaces. In the surface lighting assembly used for such applications, LED light source of large power is mounted so as to obtain a high luminance as much as possible. In this case, there is a possibility that guide light plate may be expanded/contracted due to temperature rise and temperature drop caused by generating heat when lighting the light source. Further, a similar expansion/contraction may be caused when temperature and humidity of the installation location in the surface lighting assembly is varied. At this time, the incident end surface of the light guide plate approach the light source by expansion of the light guide plate, and thereby the incident end surface apply compression to the light source. As a result, there are risks of breakage and a lighting defect of the light source.

In order to avoid influence of the lighting defect due to such expansion, the surface lighting assembly (for example, patent document 1) in which a light source holder for holding the light source is fixed near the incident end surface of the light guide plate is disclosed in the surface lighting assembly. The surface lighting assembly is constructed so that the light source can be moved together with the incident end surface when the light guide plate is expanded/contracted. The surface lighting assembly disclosed in the patent document 1 has a laminated body overlapping a light guide body, a light diffuser plate and plate part extending from a light source holder on a base plate as a laminated base substrate. A frame formed with U-shaped in cross section is fitted around the laminated body, and the above laminated body is integrated by fastening a screw over the frame. In the surface lighting assembly, since the incident end surface of the light guide plate and the light source are moved integrally, distance variation between the incident end surface and the light source can be prevented. Therefore, influence on the light source due to expansion of the light guide plate is limited.

[Patent Document 1]: JP, 2009-249143 A

### SUMMARY OF THE INVENTION

Herein, the expansion/contraction of the light guide plate causes change in a distance between an incident end surface and a light source, and applies a load on a fastening portion by fastening member such as a screw. Also, when such load becomes large, there is a risk that damage of the light guide plate occurs in the fastening portion. For this reason, a surface lighting assembly in which the influences of the fastening portion and the light source due to the expansion/contraction of the light guide plate can be comprehensively reduced is required.

An object of the present invention is to provide a surface lighting assembly which can reduce influences on the fastening portion and the light source due to expansion/contraction of the light guide plate.

In order to attain the object, the present invention is a surface lighting assembly performing surface emission by emitting light from a surface by making light from a light source incident to an incident end surface of a light guide plate. The surface lighting assembly comprising: a laminated body constructed by overlapping at least one of a diffuser sheet and an opaque plate on a surface of the light guide plate; a frame member arranged along an end edge of the laminated body including the incident end surface of the light guide plate; and a fastening member fastening the laminated body and the frame member at both ends of a longitudinal direction of the frame member in a thickness direction. The frame member has facing surfaces facing to the incident end surface and provided with a light source respectively, a first side surface continuing to the facing surface and extending along a first surface of the laminated body, and a second side surface continuing to the facing surface and extending along a second surface of the laminated body, the frame member being formed with U-shape in cross section. Further, guide holes are formed in the first and second side surfaces so as to insert and guide the fastening member along the longitudinal direction of the frame member.

Preferably, the light guide plate is a rectangular plate which is expanded/contracted according to at least one of temperature and humidity changes. The fastening member is located near a corner of the light guide plate, and obliquely moved in a diagonal direction of the light guide plate according to expansion/contraction of the light guide plate. The frame member is moved in an orthogonal direction according to a movement component of the orthogonal direction perpendicular to the incident end surface in a diagonal movement of the fastening member. Each of the guide holes guides a movement component of a direction parallel to the incident end surface in the diagonal movement of the fastening member.

Preferably, the fastening member is constructed to have a through-screw passing through the first side surface, the second side surface and the laminated body, and a nut screwed with the through-screw. The through-screw is moved into the guide hole.

Preferably, the guide hole is formed with a long hole extending along the longitudinal direction of the frame member.

Preferably, the surface emission is a double-sided light emission. The laminated body is constructed by overlapping an opaque plate in a state that at least one diffuser sheet or space is sandwiched between a first surface of the light guide plate and the opaque plate, and at least one diffuser sheet or space is sandwiched between a second surface of the light guide plate and the opaque plate.

Preferably, the surface emission is a single-sided light emission. The laminated body is constructed by overlapping at least one of the diffuser sheet and the opaque plate on a first surface of the light guide plate and by overlapping a reflective sheet on a second surface of the light guide plate. A plate member is overlapped so as to press the reflective sheet on the second surface of the light guide plate at a side opposite to the light guide plate in the reflective sheet. A through hole is formed in the plate member so as to insert the fastening member with a margin.

According to the present invention, the frame member is arranged on the end edge of the laminated body including the incident end surface of the light guide plate. Therefore, regarding to the orthogonal component perpendicular to the incident end surface due to the expansion/contraction of the light guide plate, the frame member is moved together the incident end surface of the light guide plate in the orthogonal direction. As a result, a load on the fastening portion can be reduced. Further, according to the present invention, since the fastening member is guided by the guide hole along the longitudinal direction of the frame member, relative displacement between the light guide plate and the frame member due to the expansion/contraction of the light guide plate can be absorbed. Thereby, a load on the fastening portion can be reduced in the parallel component along the incident end surface due to the expansion/contraction of the light guide plate. Furthermore, according to the present invention, since the frame member is moved by following the orthogonal component of the expansion/contraction, distance variation between the light source which is arranged on the facing surface of the frame member and the incident end surface of the light guide plate can be suppressed. Therefore, breakage of the light source is prevented, and good light emitting state can be maintained by stable incident light. In this way, according to the present invention, the surface lighting assembly which limits influence on the fastening portion and the light source due to the expansion/contraction of the light guide plate can be obtained. Further, since the base plate which is arranged on the surface lighting assembly described in the Patent Document 1 is not required, simplification of the structure and the thinning of the surface lighting assembly 1 can be facilitated.

Further, according to the present invention, regarding both components in the orthogonal direction and the parallel direction for the incident end surface in the movement of the fastening member located near the corner of the light guide plate, influences on the fastening portion and the light source can be reliably reduced.

Further, according to the present invention, the laminated body and the frame member can be securely and easily fastened by screwing the through-screw and the nut. In addition, a load on the fastening portion can be surely reduced by moving the through-screw in the guide hole.

Furthermore, according to the present invention, the movement of the fastening member in a direction perpendicular to the longitudinal direction of the guide hole formed with a long hole shape is controlled. Thereby, tracking performance of the frame member (that is, light source) in the orthogonal component on the incident end surface due to the expansion/contraction of the light guide plate is improved. As a result, the distance variation between the light source and the incident end surface of the light guide plate can be further suppressed, and thereby effects on the light source due to the expansion/contraction of the light guide plate can be further reduced.

Furthermore, according to the present invention, the laminated body, which is constructed by overlapping the opaque plate on the light guide plate so that the diffuser sheet is sandwiched between the light guide plate and the opaque plate, is collectively fixed by the fastening member and integrated with them. Thereby, the surface lighting assembly emitting a highly versatile milk color light can be obtained. Moreover, in a case of a double-sided light emitting, the diffuser sheet and a space are arranged in both surfaces of the light guide plate. Therefore, for example, when superimposing a positive film on the both surfaces of the surface lighting assembly, and emitting and displaying its design on the both surfaces thereof, show-through from one surface to the other surface is reduced.

Furthermore, according to the present invention, a fluttering of the reflective sheet is prevented by the plate member. Further, the fastening member is inserted into the through hole of the plate member with a margin. Therefore, for example, although the plate member is formed with an aluminum plate different from expansion of the light guide plate, the relative displacement between the light guide plate and the plate member can be absorbed in the present invention, and the load on the fastening portion can be reduced.

### BRIEF DESCRIPTION OF THE DRAWINGS

FIG. 1 is a front view of a surface lighting assembly viewed from a light-emitting surface according to first embodiment of the present invention;
FIG. 2 is a cross-sectional view taken along a line A-A of FIG. 1;
FIG 3 is a partly perspective view of a laminated body and frame member in the surface lighting assembly shown in FIGs. 1 and 2;
FIGs. 4A and 4B are views schematically showing a situation of movement near a corner of the light guide plate due to expansion/contraction of the light guide plate;
FIG. 5 is a front view of the surface lighting assembly viewed from the light-emitting surface according to second embodiment of the present invention;
FIG 6 is a cross-sectional view taken along a line B-B of FIG. 5; and
FIG. 7 is a partly perspective view of a laminated body and frame member in the surface lighting assembly shown in FIGs. 5 and 6.

### DESCRIPTION OF THE PREFERRED EMBODIMENT

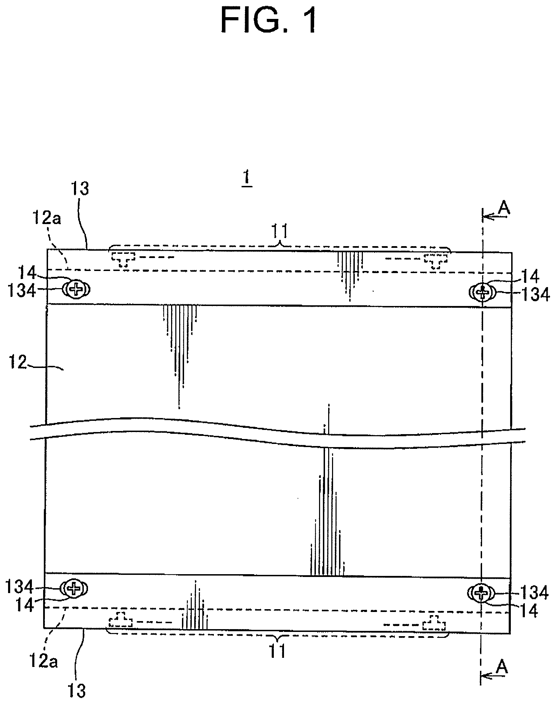

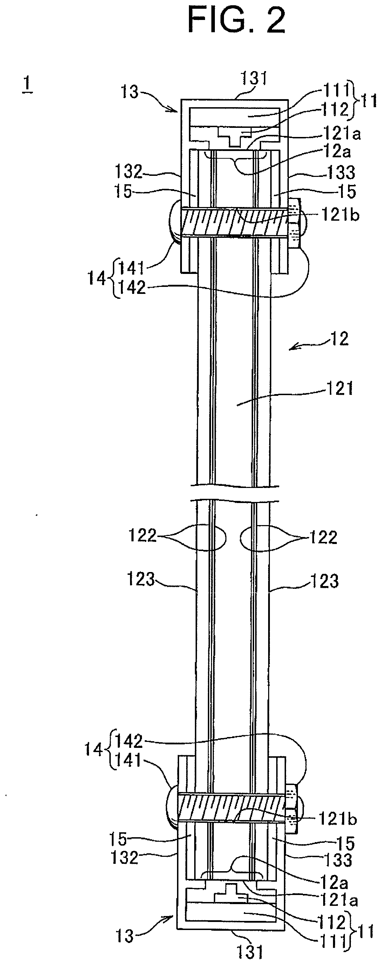

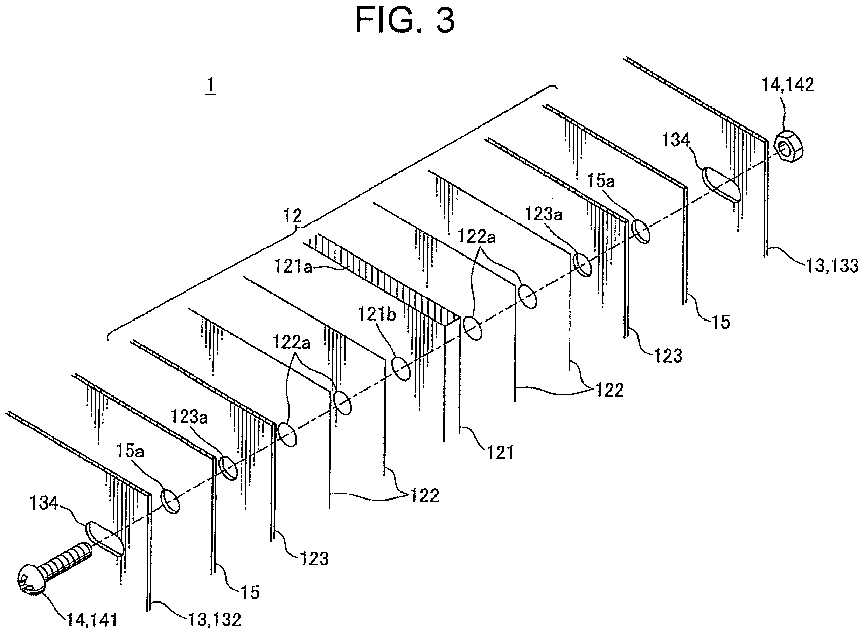

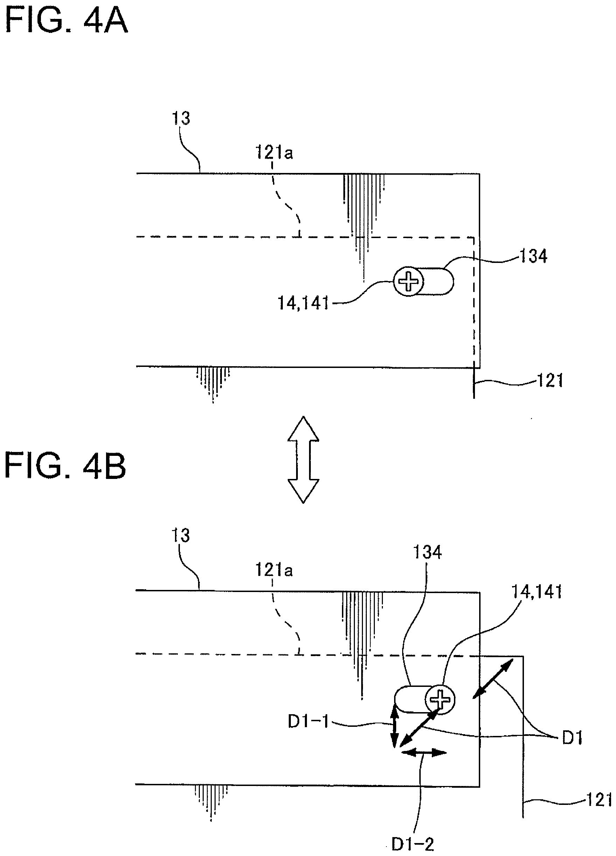

A surface lighting assembly according to a first embodiment of the present invention will be explained with reference to drawings. FIG. 1 is a front view of the surface lighting assembly viewed from a light-emitting surface of the first embodiment in the present invention. FIG 2 is a cross-sectional view taken along a line A-A of FIG. 1. FIG. 3 is a partly perspective view of a laminated body and frame member in the surface lighting assembly shown in FIGs. 1 and 2. FIGs. 4A and 4B are views schematically showing a situation of movement near a corner of the light guide plate due to expansion/contraction of the light guide plate.

The surface lighting assembly 1 shown in FIG. 1 is formed in a rectangular plate shape, and both surfaces thereof emit light with milky light. The surface lighting assembly 1 has a LED unit 11, a laminated body 12, a pair of frame member 13 arranged along end edges 12a above and below the laminated body 12, and a fastening member 14 fastening the laminated body 12 and the frame member 13.

As shown in FIG. 2, the LED unit 11 mounts a LED 112 as a light source on a base plate 111. The base plate 11 is a plate-like substrate extending along the end edge 12a. The LED 112 is arranged in a row along the end edge 12a so that an emitting port of light is directed to the end edge 12a of the laminated body 12.

As shown in FIGs. 2 and 3, the laminated body 12 is formed by overlapping a light guide plate 121 as a laminated body base body, a diffuser sheet 122, and an opaque plate 123. In the embodiment of the present invention, the laminated body 12 is constructed by overlapping the opaque plate 123 in a state that two diffuser sheets 122 are sandwiched between a first surface of the light guide plate 121 and the opaque plate 123, and two diffuser sheets 122 are sandwiched between a second surface of the light guide plate 121 and the opaque plate 123.

The light guide plate 121 is formed into a rectangular plate made of synthetic resin such as acrylic resin having stiffness as the laminated base body. In the embodiment of the present invention, the light guide plate 121 is a plate having about 5 mm in thickness. Further, in the embodiment of the present invention, each of the pair of the opposed end edges in the light guide plate 121 is an incident end surface 121 a emitting light from the LED 112. Furthermore, a through hole 121b is arranged on four position near a corner of the light guide plate 121.

The diffuser sheet 122 is made of synthetic resin such as a polyester resin, has about 0.2 mm in thickness, and is a transparent or semi-transparent rectangular sheet having light diffusion function. As shown in FIG. 3, near the corner of the diffuser sheet 122, a through hole 122a which is communicated with the through hole 121b of the light guide plate 121 is arranged.

The opaque plate 123 is made of synthetic resin such as acrylic resin, has approximately 2 mm in thickness, and is milky semi-transparent rectangular sheet. Further, as shown in FIG. 3, a through hole 123a which is communicated with the through hole 121b of the light guide plate 121 near the corner of the opaque plate 123.

The frame member 13 is arranged along the end edge 12a of the laminated body 12 including the incident end surface 121a of the light guide plate 121. Further, the frame member 13 has a facing surface 131, a first side surface 132, and a second side surface 133. The facing surface 131 is opposed to the incident end surface 121a, and is provided with a LED unit 11. The first side surface 132 extends continuously to the facing surface 131 along one surface of the laminated body 12, and the second side surface 133 extends continuously to the facing surface 131 along the other surface of the laminated body 12. The frame member 13 having those three surfaces is formed into U-shape in a cross section.

As shown in FIG. 2, the fastening member 14 fastens the laminated body 12 and the frame member 13 in a thickness direction on both ends in a longitudinal direction of the frame member 13. The fastening member 14 has a through-screw 141 and a nut 142. In the embodiment of the present invention, as shown in FIGs. 2 and 3, a spacer 15 having approximately 1 mm in thickness is arranged between the first side surface 132 of the frame member 13 and one surface of the laminated body 12 and between the second side surface 133 of the frame member 13 and the other surface of the laminated body 12. As shown in FIG. 3, a through hole 15a which is communicated with the through hole 121b of the light guide plate 121 is arranged near the corner of the spacer 15.

The through hole 121b of the light guide plate 121, the through hole 122a of the diffuser sheet 122, the through hole 123a of the opaque plate 123, and the through hole 15a of the spacer 15 are circular holes having a diameter slightly larger than the diameter of the through-screw 141.

The through-screw 141 of the fastening member 14 is inserted into the first side surface 132 and second side surface 133 of the frame member 13, and a guide hole 134 is formed in the first side surface 132 and second side surface 133 of the frame member 13 so as to guide the through-screw 141 along the longitudinal direction of the frame member 13. As shown in FIGs. 1 and 3, the guide hole 134 is formed with a long hole extended along the longitudinal direction of the frame member 13.

The through-screw 141 passes through the guide hole 134 of the first side surface 132, the guide hole 134 of the second side surface 133, the through hole 121b of the light guide plate 121, the through hole 122a of the diffuser sheet 122, the through hole 123a of the opaque plate 123, and the through hole 15a of the spacer 15. Further, the nut 142 is screwed to the through-screw 141, and thereby the laminated body 12 and the frame member 13 are fastened in the thickness direction by sandwiching the spacer 15 between them.

The light guide plate 121 made of synthetic resin such as acrylic resin is expanded/contracted with temperature changes or humidity changes. For example, when the light guide plate 121 is made of acrylic resin, it is expanded/contracted at approximately 0.7 mm per 1000 mm every temperature changes 10°C of the light guide plate 121. Further, when the temperature is raised, approximately 2 mm per 1000 mm in maximum expands by absorbing water.

It is assumed that the temperature to which the surface lighting assembly 1 is subjected during summer season is 60°C, the temperature to which the surface lighting assembly 1 is subjected during winter season is -10°C, and the temperature change between them is 70°C. Further, it is assumed that the plane-view shape of the light guide plate 121 is a rectangular form, the horizontal size of the light guide plate 121 is 2000 mm, and the vertical size thereof is 600 mm.

In this case, the light guide plate 121 would be expanded/contracted by approximately 2.94 mm [= 0.7 mm × (600 mm / 1000 mm) × (70°C / 10°C)] in a vertical direction due to the temperature changes between summer season and winter season. Furthermore, the vertical expansion due to increase in humidity may be approximately 1.2 mm [= 2 mm × (600 mm / 1000 mm)] in maximum. In other words, the expansion/contraction of the light guide plate 121 would be approximately 4.14 mm [= 2.94 mm + 1.2 mm] in total according to the temperature changes and humidity changes. When the expansion/contraction of the light guide plate 121 is uniformly caused in the vertical direction, each of portions near the incident end surfaces 121 a, which are opposed each other, of the light guide plate 121 is expanded/contracted by approximately 2.07 mm = 4.14 mm / 2 = 2.07 mm in the vertical direction.

In FIGs. 4A and 4B, a movement state near a corner of the light guide plate 121 is shown schematically. FIG. 4A shows a corner neighborhood before the expansion (or after contraction), and FIG. 4B shows the corner neighborhood after the expansion (or before contraction). As shown in FIGs. 4A and 4B, when the light guide plate 121 is expanded/contracted, the corner neighborhood of the light guide plate 121 is obliquely moved in a diagonal direction D1. As a result, the fastening member 14 (the through-screw 141 and the nut 142) located near the corner is also obliquely moved in the diagonal direction D1 together with the corner neighborhood of the light guide plate 121.

In the surface lighting assembly 1 of the embodiment of the present invention, the frame member 13 is arranged in the end edge 12a of the laminated body 12 including the incident end surface 121a of the light guide plate 121. For this reason, regarding a movement component of a orthogonal direction D1-1 perpendicular to the incident end surface 121a, the movement component being obliquely moved for the fastening member 14 associated with the expansion/contraction of the light guide plate 121, the frame member 13 is moved together with the incident end surface 121a (that is, the fastening member 14) of the light guide plate 121 in the orthogonal direction D1-1. As a result, in the movement component of the orthogonal direction D1-1 of the fastening member 14 associated with the expansion/contraction of the light guide plate 121, a load acting on a fastening portion by the fastening member 14 can be reduced.

Meanwhile, the light guide plate 121 is expanded/contracted by approximately 9.8 mm [= 0.7 mm × (1000 mm / 1000mm) × (70°C / 10°C)] with temperature changes between summer season and winter season. Further, the laterally expansion due to a humidity rise becomes approximately 4 mm [= 2 mm × (2000 mm / 1000mm)] in maximum. In other words, the light guide plate 121 is expanded/contracted by approximately 13.8 mm [= 9.8 mm + 4 mm] in total in a horizontal direction due to the temperature and humidity changes. When the expansion/contraction of the light guide plate 121 is uniformly caused in the horizontal direction, the neighborhood of a pair of left and right end surfaces of the light guide plate 121 is expanded/contracted by 6.9 mm [= 13.8 mm ÷ 2] in the horizontal direction.

In the surface lighting assembly 1 of the embodiment of the present invention, the fastening member 14 (that is, through-screw 141 and nut 142) is guided along the longitudinal direction (that is, horizontal direction) of the frame member 13 by the guide hole 134. For this reason, it is possible to absorb the relative displacement between the light guide plate 121 and the frame member 13 due to the expansion/contraction of the light guide plate 121. Thereby, the load on the fastening portion can be reduced regarding to the movement component (that is, the laterally expansion/contraction as described above) of a parallel direction D1-2 along the incident end surface 121a in the movement of the fastening member 14 due to the expansion/contraction of the light guide plate 121.

Herein, when the horizontal expansion/contraction near the pair of left and right edge surface of the light guide plate 121 is approximately 6.9 mm as mentioned above, the displacement of the through-screw 141 with the expansion/contraction in the horizontal direction is approximately 6.9 mm. When an outer diameter of the through-screw 141 is 4.5 mm, a length of the above guide hole 134, which formed with a long-hole and extended in the horizontal direction, in the longitudinal direction becomes approximately 11.4 mm = 6.9 mm + 4.5 mm so as to completely guide the through-screw 141 moving in the horizontal direction as described above.

Further, the surface lighting assembly 1 of the present invention can move the frame member 13 by following the orthogonal component of the expansion/contraction as mentioned above. For this reason, it is possible to reduce distance variation between the LED 11 of the LED unit 11 which arranged on the facing surface 131 of the frame member 13 and the incident end surface 121a of the light guide plate 121. As a result, breakage of the LED 11 is prevented, and it is possible to maintain good light emitting state by stable incident light.

As described above, the surface lighting assembly 1 of the present invention can limit influence on the fastening portion and the LED 111 due to expansion/contraction of the light guide plate 121 in a comprehensive manner. Further, in the surface lighting assembly 1 of the present invention, a base plate arranged on a surface lighting assembly disclosed in the Patent Document 1 mentioned above is not required. Thereby, simplification of the structure and the thinning of the surface lighting assembly 1 can be facilitated.

Furthermore, in the surface lighting assembly 1 of the present invention, the fastening member 14 is obliquely moved in the diagonal direction D1 according to the expansion/contraction of the light guide plate 121. At this time, for the movement of component of the parallel direction D1-2, since the guide hole 134 guides the movement of the fastening member 14 in the parallel direction D1-2, the load on the fastening portion can be surely prevented.

Furthermore, in the surface lighting assembly 1 of the present invention, the laminated body 12 and the frame member 13 can be securely and easily fastened by screwing the through-screw 141 and the nut 142. In addition, the load on the fastening portion can be surely reduced by moving the through-screw 141 in the guide hole 134.

Further, in the surface lighting assembly 1 of the present invention, as described above, each of the guide holes 134 of the first side surface 132 and the second side surface 133 in the frame member 13 is constructed with a long hole formed along the longitudinal direction of the frame member 13. Thereby, the movement of the through-screw 141 in a direction perpendicular to the longitudinal direction of the guide hole 134 is controlled. For this reason, tracking performance of the frame member 13 (that is, LED 112) in the orthogonal component on the incident end surface 121a due to the expansion/contraction of the light guide plate 121 is improved. As a result, the distance variation between the LED 112 and the incident end surface 121a of the light guide plate 121 can be further suppressed, and thereby effects on the LED 112 due to the expansion/contraction of the light guide plate 121 can be further reduced.

According to the surface lighting assembly 1 of the present invention, the laminated body 12, which is formed by overlapping the opaque plate 123 on the light guide plate 121 in a state that the diffuser sheet 122 is sandwiched between the light guide plate 121 and the opaque plate 123, is collectively fixed by the fastening member 14 and integrated with them. Thereby, the surface lighting assembly 1 emitting a highly versatile milk color light can be obtained. Furthermore, the diffuser sheets 122 are located on both surfaces of the light guide plate 121, respectively. For this reason, for example when superimposing a positive film on the both surfaces of the surface lighting assembly 1, and emitting and displaying its design on the both surfaces thereof, show-through from one surface to the other surface is reduced.

Also, instead of the above diffuser sheet 122, a space (that is, a gap) may be provided between the light guide plate 121 and the opaque plate 123 in addition to a portion of the diffuser sheet 122. Even with such a structure, show-through as described above can be reduced.

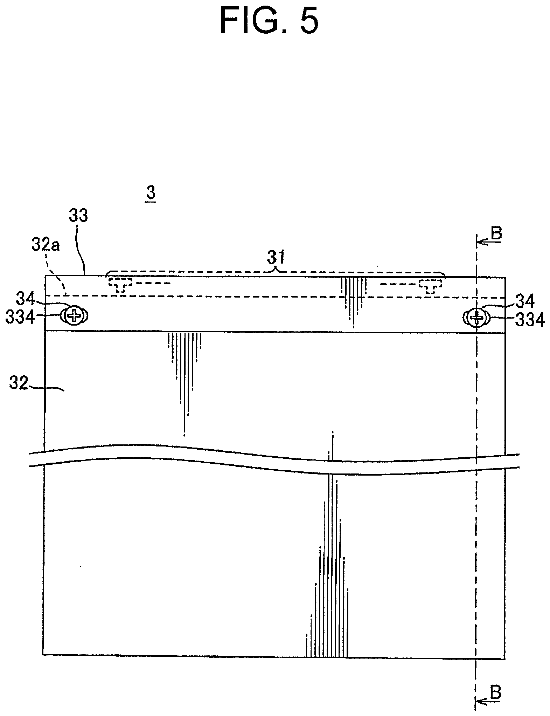

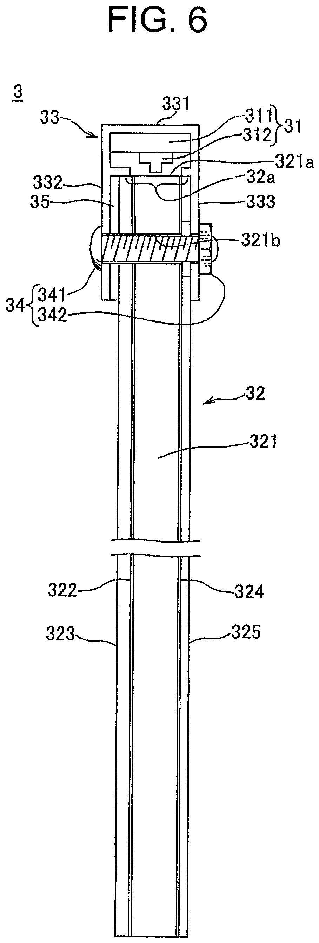

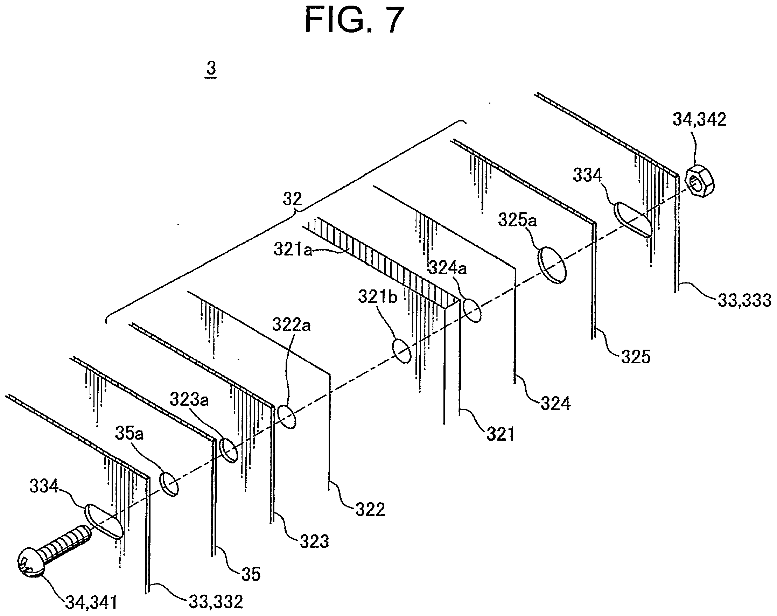

Next, the surface lighting assembly according to a second embodiment of the present invention will be explained with reference to FIGs. 5-7. FIG. 5 is a front view of the surface lighting assembly viewed from a light-emitting surface of the second embodiment in the present invention. FIG. 6 is a cross-sectional view taken along a line B-B of FIG. 5. FIG. 7 is a partly perspective view of the laminated body and frame member in the surface lighting assembly shown in FIGs. 5 and 6.

The surface lighting assembly 3 shown in FIG. 5 is formed in a rectangular shape, and one surface thereof emits light with milky light. The surface lighting assembly 3 has a LED unit 31, a laminated body 32, a frame member 33 arranged along an edge 32a above the laminated body 32, and a fastening member 34 fastening the laminated body 32 and the frame member 33.

As shown in FIG. 6, the LED unit 31 mounts a LED 312 as a light source on a base plate 311.

As shown in FIGs. 6 and 7, the laminated body 32 of the second embodiment has a light guide plate 321 equivalent of the light guide plate 121, a diffuser sheet 322 equivalent of the diffuser sheet 122, and an opaque plate 323 equivalent of the opaque plate 123. In the laminated body 32 of the second embodiment, one of the diffuser sheet 322 is overlapped on one surface of the light guide plate 321, and the opaque plate 323 is overlapped on the diffuser sheet 322. A side of the opaque plate 323 in the laminated body 32 is a light-emitting surface of the laminated body 32, that is to say, a light-emitting surface of the surface lighting assembly 3.

In the second embodiment of the present invention, as one example of the laminated body of single sided light emission, the configuration that one of the diffuser sheet 322 and the opaque plate 323 are overlapped on one surface of the light guide plate 321 is illustrated. However, the laminated body of the single sided light emission is not limited thereto. For example, it may have configuration that the diffuser sheet or the opaque plate is overlapped on one surface of the light guide plate.

Meanwhile, one of a reflective sheet 324 is overlapped on the other surface of the light guide plate 321. For example, the reflective sheet 324 is a white rectangular sheet which is made of polyester-based synthetic resin, is approximately 0.2 mm in thickness, and has high reflectivity. A light which enters the incident end surface 321a of the light guide plate 321 is reflected by the reflective sheet 324, and is entered into an inside of the light guide plate 321. Thereby, the above light-emitting surface of the laminated body 32 is emitted. Further, an aluminum plate 325 as a plate member is overlapped on an opposite side of the light guide plate 321 in which the reflective sheet 324 is not provided so as to press the reflective sheet 324 into the other surface. The reflective sheet 324 is adhered to the aluminum plate 325 by glue.

Through holes 321b are arranged in two portions near the two corners at the incident end surface 321a of the light guide plate 321, respectively. In the diffuser sheet 322, a through hole 322a passing through the through hole 321b of the light guide plate 321is arranged. Similarly, a through hole 323a is arranged in the opaque plate 323, and a through hole 324a passing through the through hole 321b of the light guide plate 321 is arranged in the reflective sheet 324. On the other hand, in the aluminum plate 325, a large-diameter through hole 325a larger than these through holes is arranged as described below.

In common with the frame member 13 of the first embodiment, the frame member 33 has a facing surface 331, a first side surface 332, and a second side surface 333. Further, the frame member 333 is formed with U-shaped in cross section. The facing surface 331 is provided with a LED unit 11 facing to an incident end surface 321a. The first side surface 332 extends along a light-emitting surface of the laminated body 12 so as to continue to the facing surface 331. Further, the second side surface 333 extends along a back surface of the laminated body 12 so as to continue to the facing surface 331.

As is the case with the fastening member 14 of the first embodiment, the fastening member 34 has a through-screw 341 and a nut 342. Furthermore, in the second embodiment, as shown in FIGs. 6 and 7, one spacer 35 having approximately 1 mm in thickness is arranged between the first side surface 332 of the frame member 33 and one surface of the laminated body 32. Further, as shown in FIG. 7, a through hole 35a passing through a through hole 321b of the light guide plate 321 is arranged near the corner of the spacer 35.

The through hole 321b of the light guide plate 321, the through hole 322a of the diffused sheet 322, the through hole 323a of the opaque plate 323, and the through hole 35a of the spacer 35 are formed with a circular shape having a diameter slightly larger than a diameter of the through-screw 341. Further, a large-diameter through hole 325a of the aluminum plate 325 is formed with a circular shape having a diameter larger than those through holes. More specifically, the larger-diameter through hole 325a is a circular hole having a large diameter against the diameter of the through-screw 341, and thereby the through-screw 341 is inserted into the large-diameter through hole 325a with a margin.

Also, as shown in FIGs. 5 and 7, in the first and second side surfaces 332, 333 of the frame member 33, a guide hole 334 constructed with a long hole similar to the guide hole 14 of the first embodiment is formed. The through-screw 341 passes through the guide hole 334 of the first side surface 332, the guide hole 334 of the second side surface 333, the through hole 321b of the light guide plate 321, the through hole 322a of the diffuser sheet 322, the through hole 323a of the opaque plate 323, the through hole 324a of the reflective sheet 324, the large-diameter through hole 325a of the aluminum plate 325, and the through hole 35a of the spacer 35. Then, the nut 342 is screwed into the through-screw 341, and thereby the laminated body 32 and the frame member 33 are fixed in the thickness direction in a state that the spacer 35 is sandwiched between them.

As is the case with surface lighting assembly 1 of the first embodiment, it is indisputable that the surface lighting assembly 3 of the second embodiment explained in above can suppress influences on the fastening portion and the LED 312 due to expansion/contraction of the light guide plate 321. Further, the light guide plate 321 is a laminated base substance of the laminated body 32. For this reason, a base plate is not required, and thereby simplification of the structure and the thinning of the surface light assembly 3 can be facilitated. Furthermore, the laminated body 32 and the frame member 33 can be easily and surely fixed by screwing together the through-screw 341 and the nut 342 just like the surface light assembly 1 of the first embodiment. Moreover, as with the surface lighting assembly 1 of the first embodiment, tracking performance of the frame member 33 (that is, LED 312) in an orthogonal component on the incident end surface 321a due to the expansion/contraction of the light guide plate 321 is improved by controlling the movement of the through-screw 341 in the orthogonal direction. As a result, effects of the LED 312 due to the expansion/contraction of the light guide plate 321 can be further reduced. Also, in the surface lighting assembly 3 of the second embodiment, the laminated body 32 laminating the light guide plate 321, the diffuser sheet 322, the opaque plate 323, the reflective sheet 324, and the aluminum plate 325 is collectively fixed and integrated. Thereby, the surface lighting assembly 3 of the second embodiment is configured as a surface lighting assembly having a high versatility in which one surface emits light with milky light.

In the surface lighting assembly 3 of the second embodiment, the through-screw 341 is inserted into the large-diameter through hole 325a of the aluminum plate 325 with a margin. Thereby, the relative displacement between the aluminum plate 325 in which expansion is differ from the light guide plate 321 and the light guide plate 321 is absorbed, and the load on the fastening portion can be reduced.

In the second embodiment of the present invention, the diameter of the large-diameter through hole 325a of the aluminum plate 325 has a same length as a length of the guide hole 334 composed of long hole in the longitudinal direction. As with a numerical example described in the guide hole of the first embodiment, when the length of the guide hole 334 of the second embodiment in the longitudinal direction is approximately 11.4 mm, the diameter of the large-diameter through hole 325a of the aluminum plate 325 is also approximately 11. 4 mm. Thereby, although the through-screw 341 is moved in any directions for the aluminum plate 325 according to the expansion/contraction of the light guide plate 321, the movement of the through-screw 341 remains within an inside of the large-diameter through hole 325a. As a result, the relative displacement with respect to the aluminum plate 325 of the light guide plate 321 can be absorbed.

Also, the above-described two embodiments are mere representative modes of the present invention, and the present invention is not limited to the embodiments. That is, various modifications can be made within a scope not departing from a gist of the present invention. When a configuration of the light-emitting panel of the invention is included by the modification, the modification is fall under the category of the invention.

For example, in the above two embodiments, specific dimensions and material regarding the thickness and materials of each of components in the light guide plate and guide holes are illustrated. However, the present invention is not limited thereto. Therefore, dimensions and materials of the components and guide hole in the surface lighting assembly of the present invention may be appropriately changed.

Further, in the two embodiments described in the above, as one example of light source in the present invention, the light source (LED) arranged in a line along the incident end surface of the light guide plate is illustrated. However, the present invention is not limited thereto. For example, the light source may be arranged along the incident end surface in a plurality of lines in the thickness direction of the light guide plate.

Furthermore, in the above first embodiment, as one example of the surface lighting assembly in the present invention, the surface lighting assemblies 1 and 2 of double-sided light emission are illustrated so that each of the pair of the opposed end edges in the light guide plate formed in a rectangular shape is the incident end surface of light from the light source. Moreover, in the above second embodiment, as one example of the surface lighting assembly of the present invention, the surface lighting assemblies 3 and 4 of single sided light emission are illustrated so that one end edge of the light guide plate formed in a rectangular shape is the incident edge surface of light from the light source. However, the surface lighting assembly of the present invention is not limited thereto. For example, the present invention may be a double-sided light emission type surface lighting assembly so that one end edge of the light guide plate is the incident end surface of light from the light source. Further, the present invention may be a single sided light emission type surface lighting assembly so that each of the pair of the opposed end edges of the light guide plate is the incident end surface of light from the light source.

Furthermore, in the above two embodiments, as one example of the guide hole in the present invention, the guide holes 134 and 334 formed with a long hole shape are illustrated. However, the guide hole of the present invention is not limited thereto. The guide hole may be any fastening member holes which can insert the fastening member and fix it along the longitudinal direction of the frame member. For example, the guide hole may be an elliptical hole shape other than the long hole. Therefore, a specific shape such as above is not limited.

Furthermore, in the above two embodiments, as one example of the fastening member in the present invention, the fastening members 14 and 34 having the through-screw and the nut are illustrated. However, the fastening members of the present invention are not limited thereto. The fastening member may be an object which can fixes the laminated body and the frame member in the thickness direction. For example, the fastening member may be constructed without using a nut such as a rivet. Therefore, a specific construction such as above is not limited.

### Reference Signs List

- 1,3: surface lighting assembly
- 11, 31: LED unit
- 12, 32: laminated body
- 12a, 32a: end edge
- 13,33: frame member
- 14, 34: fastening member
- 15, 35: spacer
- 111, 311: base plate
- 112,312: LED (light source)
- 121,321: light guide plate
- 121a, 321a: incident end surface
- 121b, 122a, 123a, 15a, 321b, 322a, 323a, 324a, 35a: through hole
- 122, 322: diffuser sheet
- 123, 323: opaque plate
- 131,331: facing surface
- 132,332: first side surface
- 133, 333: second side surface
- 134,334: guide hole
- 141, 341: through-screw
- 142, 342: nut
- 324: reflective sheet
- 325: aluminum plate (plate member)
- 325a: large-diameter through hole (through hole)

## Claims

1. A surface lighting assembly performing surface emission by emitting light from a surface by making light from a light source incident to an incident end surface of a light guide plate, the surface lighting assembly comprising:
a laminated body constructed by overlapping at least one of a diffuser sheet and an opaque plate on a surface of the light guide plate;
a frame member arranged along an end edge of the laminated body including the incident end surface of the light guide plate; and
a fastening member fastening the laminated body and the frame member at both ends of a longitudinal direction of the frame member in a thickness direction,
wherein the frame member has facing surfaces facing to the incident end surface and provided with a light source respectively, a first side surface continuing to the facing surface and extending along a first surface of the laminated body, and a second side surface continuing to the facing surface and extending along a second surface of the laminated body, the frame member being formed with U-shape in cross section, and
wherein guide holes are formed in the first and second side surfaces so as to insert and guide the fastening member along the longitudinal direction of the frame member.

2. The surface lighting assembly according to claim 1, wherein the light guide plate is a rectangular plate which is expanded/contracted according to at least one of temperature and humidity changes,
the fastening member is located near a corner of the light guide plate, and obliquely moved in a diagonal direction of the light guide plate according to expansion/contraction of the light guide plate,
the frame member is moved in an orthogonal direction according to a movement component of the orthogonal direction perpendicular to the incident end surface in a diagonal movement of the fastening member, and
each of the guide holes guides a movement component of a direction parallel to the incident end surface in the diagonal movement of the fastening member.

3. The surface lighting assembly according to claim 1 or 2, wherein the fastening member is constructed to have a through-screw passing through the first side surface, the second side surface and the laminated body, and a nut screwed with the through-screw, and
the through-screw is moved into the guide hole.

4. The surface lighting assembly according to any one of claims 1 to 3, wherein the guide hole is formed with a long hole extending along the longitudinal direction of the frame member.

5. The surface lighting assembly according to any one of claims 1 to 4, wherein the surface emission is a double-sided light emission, and
the laminated body is constructed by overlapping an opaque plate in a state that at least one diffuser sheet or space is sandwiched between a first surface of the light guide plate and the opaque plate, and at least one diffuser sheet or space is sandwiched between a second surface of the light guide plate and the opaque plate.

6. The surface lighting assembly according to any one of claims 1 to 4, wherein the surface emission is a single-sided light emission,
the laminated body is constructed by overlapping at least one of the diffuser sheet and the opaque plate on a first surface of the light guide plate and by overlapping a reflective sheet on a second surface of the light guide plate,
a plate member is overlapped so as to press the reflective sheet on the second surface of the light guide plate at a side opposite to the light guide plate in the reflective sheet, and
a through hole is formed in the plate member so as to insert the fastening member with a margin.
